# EUROPEAN PATENT APPLICATION

(11) **EP 2 886 903 A2**
(43) Date of publication of application: **24.06.2015**
(21) Application number: 14003666.6
(22) Date of filing: 30.10.2014
(51) Int. Cl.: F16D 65/18, B61H 13/00

(54) **Brake arrangement, particularly for railway vehicles**

(30) Priority: 31.10.2013 CZ 20130834
(71) Applicant: Technicka univerzita v Liberci, 460 01 Liberec (CZ)
(72) Inventor: Vozenílek, Robert, 460 15 Liberec (CZ); Bukvic, Martin, 511 01 Turnov (CZ); Brabec, Pavel, 463 43 Ceský Dub (CZ); Beran, Leos, 466 04 Jablonec nad Nisou (CZ)
(74) Representative: Reichel, Pavel

(57) **Abstract**

Brake arrangement, particularly for railway vehicles, where brake pads (7, 8) are in a facing relationship with a brake disc (9), pressed against the disc (9) by means of a pin (6) and at least one spring (5) acting on the pin (6), and where the motion of this pin (6) is derived from linear advance movement of a motion screw (2) with a nut (3) relative to rotary movement of a rotor of an electric motor (1). The nut (3) of the motion screw (2) as well as the pin (6) are in contact with the arm of the first order lever (4), while the area of contact of the nut (3) of the motion screw (2) and the lever (4) is farther from the axis of rotation of the lever (4) than the area of contact of the pin (6) and the lever (4). In order to reduce the coefficient of contact friction between the lever (4) and the nut (3) of the motion screw (2), the lever (4) or the nut (3) can be fitted, in the area of their contact, with a contact element (15) with rounded or spherical surface. In order to reduce the coefficient of contact friction between the lever (4) and the pin (6), the lever (4) can be fitted, in the area of their contact, with a rolling element.

## Description

### Field of the invention

The invention relates to an arrangement for a brake with a floating caliper or with a floating disc, particularly for railway vehicles.

### Description of the prior art

A large portion of electro-mechanical disc brakes use a motion screw in their design, one of the solutions is described in the US patent No. 8136641.
There is often an insufficient range of transmission ratio involved and a more complex design, which are limiting factors for their use in heavy vehicles, for example railway vehicles. The object of this invention is the arrangement of a brake with high transmission ratio, which is compact and with reduced requirements for mounting space.

### Summary of the invention

The subject of the invention is an arrangement for a brake, particularly for railway vehicles, where brake pads are in a facing relationship with a brake disc, pressed against the disc by means of a pin and at least one spring acting on the pin, and where the motion of this pin is derived from linear advance movement of a motion screw with a nut linked to rotary movement of a rotor of an electric motor. The substance of the invention is such an arrangement where the nut of the motion screw as well as the pin are in contact with the arm of the first order lever, while the area of contact of the nut of the motion screw and the lever is farther from the axis of rotation of the lever than the area of contact of the pin and the lever. The motion screw can feature a ball, trapezoidal or tapered design, namely in single- or multiple-thread design.

In order to reduce the coefficient of contact friction between the lever and the nut of the motion screw, it is possible to fit the lever or the nut in the area of their contact with a contact element with rounded or spherical surface. This surface may consist of a separate shaped member mounted on one or on the other component according to the selected type of design. In order to reduce the coefficient of contact friction between the lever and the pin, the lever in the area of their contact is fitted with a rolling element, for example, a rolling bearing or element with rounded or spherical contact surface.

High transmission ratio is primarily the advantage of this brake arrangement, which is suitable for very heavy vehicles, particularly for railway vehicles. Compactness, lesser requirements for mounting space and, in particular, structural simplicity with high rigidity of the mechanism and related favourable performance/price ratio are other advantages. High safety is an important aspect and, therefore, the pressing force is generated by means of springs (energy accumulator) with automatic magnitude setting independent of wear and tear of the brake lining and brake disc. The electric motor with the mechanism described hereinafter serves the purpose of releasing the brake.

### Brief description of the drawings

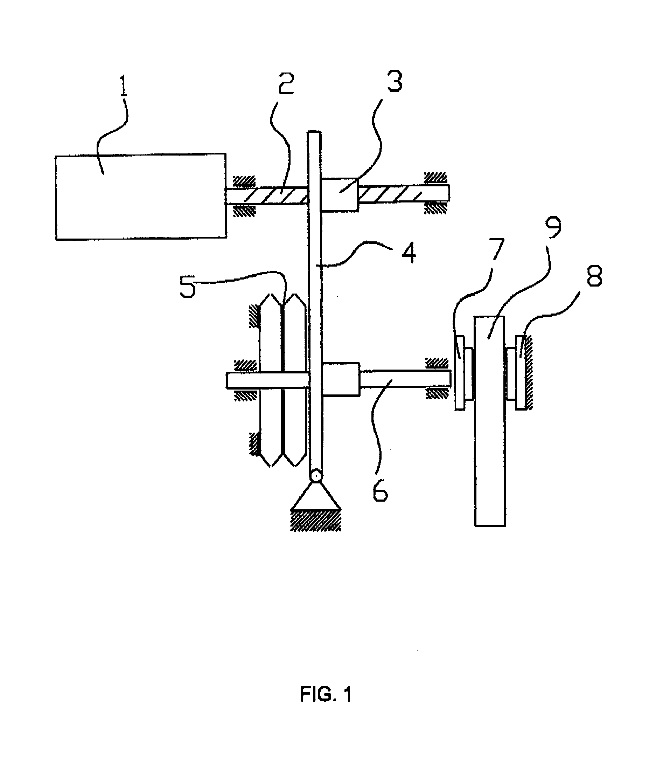

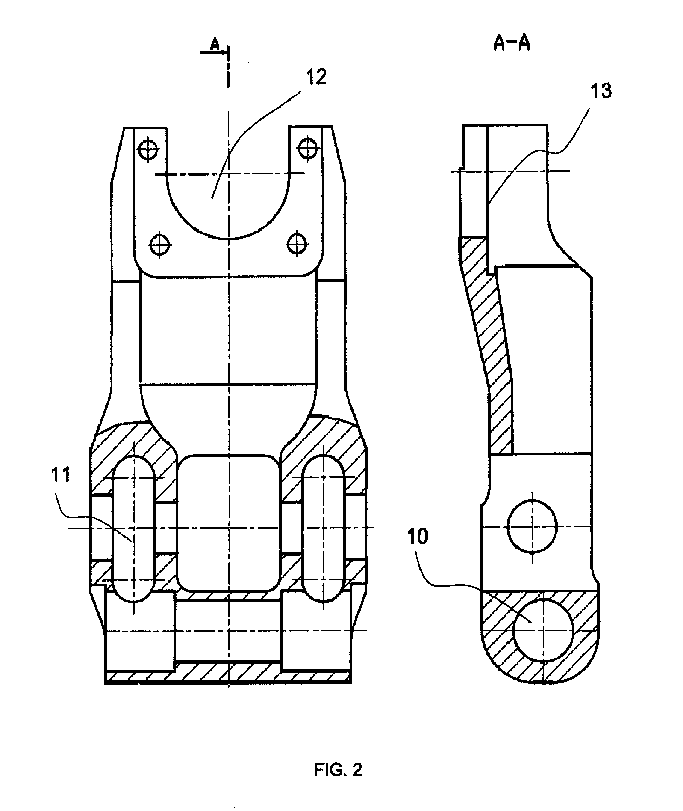

The attached drawings show examples of the design of this invention. Fig. 1 is a schematic representation of a design of a brake with a floating caliper or with a floating disc, particularly for railway vehicles. Fig. 2 illustrates an example of a first order lever housing in a broken-out section in front and side views. A recess for passage of the motion screw and a mounting surface for contact surface to reduce contact friction between the lever and the nut of the ball motion screw are in the upper part of lever housing. In the bottom part of the lever housing, there is a transverse through hole for the pin with the axis of rotation of the lever and above it, symmetric through recesses in the lever for the positioning of rolling bearings, which are in contact with the pin pressed against the brake pad.

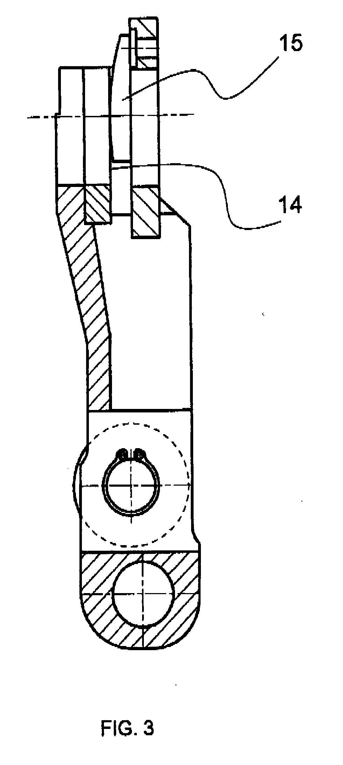

Fig. 3 shows a section through the lever with contact elements. A rolling contact element is shown in the bottom part of the lever. The upper part shows contact of the lever and the shaped contact member placed on the nut of the ball screw.

### Examples of preferred embodiments

The subject of this invention is a design of a brake with a floating caliper or with a floating disc, which is particularly designed for rolling stock. Brake pads 7, 8 are arranged to bear against a brake disc 9 by means of a prestressed spring or a set of springs 5, which act on a pin 6 (Fig. 1). The springs 5 could be of a disc or coil type. The motion of this pin 6 is derived from linear advance movement of a motion screw 2 with a nut 3 relative to rotary movement a rotor of an electric motor 1. Brake release is ensured by rotary movement of the electric motor 1, which rotates the motion screw 2, which transfers, by means of the nut 3, rotary movement from the electric motor 1 to linear advance movement. The motion screw 2 with the nut 3 can particularly feature a ball, tapered or trapezoidal thread design or other shaped thread design. All the mentioned motion screws 2 could be in a single- or multiple-thread design.

The nut 3 of motion screw 2 as well as the pin 6 are in contact with the arm of first order lever 4, while the area of contact of the nut 3 of motion screw 2 and the lever 4 is farther from the axis of rotation of the lever 4 than the area of contact of the pin 6 and the lever 4.
Moving the nut 3 moves the first order lever 4. The lever 4 pushes against springs 5, thus moving the pin 6 and releasing the brake pads 7, 8. Once the electric motor 1 is released, the force of springs 5 will cause spontaneous movement of the motion screw 2, nut 3, lever 4 and the pin 6, thus bringing the brake pads 7, 8 to bear against the brake disc 9. The nut of ball screw 3 is fitted, in the place of mutual contact with the lever 4, with a contact element 15 with contoured surface or similarly shaped surface to reduce contact friction between the parts. Fig. 2 and Fig. 3 illustrate an example of a first order lever 4. A recess 12 for passage of the motion screw 2 and a mounting surface 13 for detachable attachment of the member 14 to the contact surface, which is in direct contact with a shaped contact element 15 mounted on a nut 3 of the ball screw, are in the upper part of the lever 4 housing. In the bottom part of the lever housing, there is a transverse through hole 10 for the pin with the axis of rotation of the lever 4 and above it, symmetric through recesses 11 in the lever 4 for the positioning of rolling bearings, which are in contact with the pin 6 pressed against the brake pad 7. A member with spherical or rounded contact surface can be used instead of the bearings in order to reduce contact friction.

### List of reference numerals

1... electric motor
2... motion screw
3... nut for motion screw 2
4... lever
5... springs
6... pin
7, 8... brake pads
9... brake disc
10... hole for the pin with the axis of rotation of the lever 4
11... recess in lever 4 housing for the positioning of bearings
12... recess in lever 4 housing for passage of the motion screw
13... mounting surface
14... member with contact surface
15... contact element

## Claims

1. Arrangement for a brake, particularly for railway vehicles, where brake pads (7, 8) are in a facing relationship with a brake disc (9), and are pressed against the disc (9) by means of a pin (6) and at least one spring (5) acting on the pin (6), and where the motion of this pin (6) is derived from linear advance movement of a motion screw (2) with a nut (3) linked to rotary movement of a rotor of an electric motor (1), **characterized in that** the nut (3) of motion screw (2) as well as the pin (6) are in contact with the arm of first order lever (4), while the area of contact of the nut (3) of motion screw (2) and the lever (4) is farther from the axis of rotation of the lever (4) than the area of contact of the pin (6) and the lever (4).

2. Arrangement for a brake according to claim 1, **characterized in that** the lever (4) or a nut (3) is fitted with a contact element (15) with rounded or spherical surface in the area of contact of the lever (4) and the nut (3) of the motion screw (2) in order to reduce the coefficient of contact friction between them.

3. Arrangement for a brake according to claim 1 or 2, **characterized in that** the lever (4) is fitted with a rolling element in the area of contact of the lever (4) and the pin (6) in order to reduce the coefficient of contact friction between them.

4. Arrangement for a brake according to claim 3, **characterized in that** the rolling element is formed by a rolling bearing, or rounded or spherical surface.

5. Arrangement for a brake according to any of the claims 1 to 4, **characterized in that** the motion screw (2) of a ball, trapezoidal or tapered design, namely in single- or multiple-thread design.
